# EUROPÄISCHE PATENTSCHRIFT

(11) **EP 2 841 515 B1**
(45) Veröffentlichungstag und Bekanntmachung des Hinweises auf die Patenterteilung: **22.03.2017**
(21) Anmeldenummer: 13717269.8
(22) Anmeldetag: 17.04.2013
(51) Int. Cl.: C09J 5/06, B32B 37/12, B29C 65/48, B29C 65/02

(54) **VERFAHREN UND VORRICHTUNG ZUM VERBINDEN VON FOLIENENDEN EINER ERSTEN FOLIENBAHN UND EINER ZWEITEN FOLIENBAHN**
METHOD AND APPARATUS FOR JOINING THE END OF A FIRST FILM WEB AND A SECOND FILM WEB
PROCÉDÉ ET DISPOSITIF POUR ASSEMBLER LA FIN D'UNE PREMIÈRE BANDE DE FILM ET D'UNE SECONDE BANDE DE FILM

(30) Priorität: 24.04.2012 DE 102012103586
(43) Veröffentlichungstag der Anmeldung: 04.03.2015
(73) Patentinhaber: OVD Kinegram AG, 6301 Zug (CH); Leonhard Kurz Stiftung & Co. KG, 90763 Fürth (DE)
(72) Erfinder: BERNET, Thomas, CH-6264 Pfaffnau (CH); ARNOLD, Fabian, CH-6467 Schattdorf (CH); OESTREICH, Volker, 92778 Illschwang (DE)
(74) Vertreter: Louis Pöhlau Lohrentz
(86) Internationale Anmeldenummer: PCT/EP2013/057993
(87) Internationale Veröffentlichungsnummer: WO 2013/160170

(56) Entgegenhaltungen:
- EP-A1- 2 216 279
- WO-A2-2008/124449
- DE-A1- 3 907 117
- DE-A1-102010 030 437
- GB-A- 2 461 332
- US-A- 4 244 769

## Beschreibung

Die Erfindung betrifft ein Verfahren zum Verbinden einer ersten Folienbahn und einer zweiten Folienbahn, wobei die beiden Folienbahnen eine Transferfolie oder Laminierfolie bereitstellen und eine Trägerfolie und eine Dekorlage umfassen, wobei die Dekorlage insbesondere als (vollflächige) Metallschicht und/oder Farbschicht ausgebildet ist. Die Erfindung betrifft auch eine Folienbahn, wie sie durch das erfindungsgemäße Verfahren gebildet werden kann.

Bei der Verarbeitung und Anwendung von Transferfolien und Laminierfolien müssen oftmals mehrere Folienbahnen miteinander verbunden werden, damit man eine entsprechend längere Gesamtlänge ("Lauflänge") erhält. Die Folienbahn liegt dann vorzugsweise aufgerollt auf einer Rolle ohne Unterbrechungen in der gewünschten Lauflänge vor.

Je länger die so erzielte Folienbahn ist, in desto höherem Maße kann bei ihrem Einsatz eine hohe Produktivität erzielt werden. Auch werden Rüst- oder Standzeiten, die etwa mit einem Rollenwechsel einhergehen, verringert.
Ein bekanntes Verfahren zum Verbinden von Folienbahnen ist das so genannte "Spleißen", bei dem handelsübliche selbstklebende Klebebänder manuell angebracht werden, um zwei Folienbahnen zusammenzukleben. Die Verklebung erfolgt bei Laminier- oder Transferfolien (einseitig mit einer ablösbaren Transferlage beschichteten Folien) typischerweise auf der unbeschichteten Folienseite. Die Breite des Klebebandes liegt typischerweise im Bereich von zwischen 2 cm bis 5 cm. Die Klebebänder haben eine typische Dicke aus dem Bereich von ca. 30 µm bis 130 µm. Das zweiseitige Aufbringen von Klebebändern findet ebenfalls Anwendung.

Die DE 10 2010 030 437 A1 offenbart einen Kaschierklebstoff zum Verbinden zweier Folienbahnen, wobei die Folienbahnen vollflächig miteinander verbunden werden.

Die EP 2 216 279 A1 beschreibt ein Verfahren zum Heißsiegeln von Laminaten, die als Essensverpackung zum Einsatz kommen.

Das Spleißen mit Klebeband ist kostengünstig, kann mit einer relativ hohen Passergenauigkeit der Folienbahnen zueinander folgen, und der Spleiß (die Verbindungsstelle oder Verbindungsnaht) verfügt über hohe Festigkeiten, insbesondere Zugfestigkeit in Laufrichtung der Folienbahn. Die Zugfestigkeit in Laufrichtung der Folienbahn ist entscheidend, da während der Verarbeitung von Folienbahnen z. B. in Druckmaschinen, Kaschiermaschinen, Laminiermaschinen, Heißprägemaschinen, Kaltprägemaschinen die auftretenden Kräfte, insbesondere zum schnellen Transport der Folienbahn, in Laufrichtung auftreten.

Beim Prägen von Einzelbildern sind diese Einzelbilder bzw. Motive (Nutzen) in einem bestimmten Layout auf der Folie angeordnet, in regelmäßigen Zeilen und Spuren. Die zu prägenden Nutzen liegen dabei in der Regel so nahe beieinander, dass das typischerweise verwendete Klebeband im Bereich der Prägezone liegen würde, also auch im Bereich des zu prägenden Nutzens. Die von dem Klebeband überdeckten Nutzen sind daher nicht prägbar und gehen verloren. Um Fehlprägungen und/oder Verschmutzungen der Prägestempel durch das Klebeband bzw. durch am Rand des Klebebands austretenden Klebstoff des Klebebandes zu vermeiden, wird der Spleiß deswegen detektiert, und es wird ein Folienvorschub durchgeführt, wodurch ein Materialverlust eintritt und die Produktivität vermindert wird. Um den Spleiß detektierbar zu machen, wird häufig ein farbiges und meist opakes (undurchsichtiges) Klebeband verwendet.

Ein Nachteil von Spleißen besteht auch darin, dass wegen des verwendeten herkömmlichen Klebebandes der zu diesem gehörige Kaltkleber bei höherem Druck, etwa auch innerhalb einer gespleißten Folienrolle, herausgedrückt werden kann, sodass benachbarte Windungen der Rolle miteinander verklebt werden und die Rolle nicht mehr abwickelbar ist. Der innerhalb der Rolle so verteilte Kaltkleber verschmutzt außerdem eine Vielzahl von Stellen der Folienbahn, die dadurch eventuell nicht mehr verwendbar sind. Ein weiterer Nachteil besteht darin, dass die bisher zur Anwendung kommenden relativ dicken Klebebänder zu unerwünschten Markierungen und Abdrücken in den Folienrollen, insbesondere durch mehrere Folienlagen hindurch, führen, so dass zusätzlich Material der Folienbahn in der Nähe der Spleiße für die weitere Verarbeitung unbrauchbar werden kann.

Aufgabe der vorliegenden Erfindung besteht darin, ein verbessertes Verfahren anzugeben, durch das die genannten Nachteile verringert oder vermieden werden.

Erfindungsgemäß wird diese Aufgabe durch ein Verfahren zum Verbinden einer ersten Folienbahn und einer zweiten Folienbahn gelöst, wobei die beiden Folienbahnen eine Transferfolie bereitstellen und eine Trägerfolie und eine Dekorlage (insbesondere eine Metallschicht und/oder Farbschicht) umfassen, wobei vorgesehen ist, dass das Verbinden vermittels eines Klebstoffes erfolgt, der in einem Grundzustand bei Zimmertemperatur (20° C bei Atmosphärendruck von 1013 mbar) deaktiviert (bzw. nicht klebend) ist, und der durch Zufuhr von Wärme oder durch Zufuhr von Strahlung aktivierbar ist und bei dem Verfahren (entsprechend) aktiviert wird.
Die Dekorlage kann auch optisch wirksame Mikrostrukturen, beispielsweise diffraktive oder refraktive Strukturen wie z. B. Kinegram^{®}, Hologram, Mattstrukturen, Beugungsstrukturen Nullter Ordnung oder auch Mikroprismen oder Mikrolinsen, aufweisen, deren Sichtbarkeit durch Metallschichten, Metallverbindungen oder sogenannte HRI-Schichten (HRI = High Refractive Index) insbesondere als Reflexionsschicht verstärkt wird. Zum Einsatz als Dekorlage können auch Mehrschichtsysteme, ein- oder mehrfarbig gedruckte Schichten, Schichten mit Magnetpigmenten usw. kommen.

Dadurch, dass vorliegend ein Heißklebstoff oder ein Reaktivklebstoff, insbesondere ein durch Strahlung härtbarer Klebstoff verwendet wird, wird der Nachteil im Stand der Technik vermieden, dass der Klebstoff unter Druck heraus gedrückt bzw. heraus gequetscht werden kann. Ein Heißklebstoff bewirkt auch einen besonders guten Halt, sodass mit vergleichsweise geringem Materialeinsatz an der Klebestelle die für eine Folienbahn erforderliche Zugfestigkeit erzielt werden kann. Der durch Strahlung härtbare Klebstoff ist bevorzugt ein mittels UV-Strahlen härtbarer Klebstoff, es sind aber auch andere Strahlen (blaues Licht, Ionenstrahlen etc.) grundsätzlich zur Härtung einsetzbar. Als Reaktivklebstoff sind alle Einkomponenten- und Mehrkomponenten-Reaktivklebstoffe einsetzbar. Derartige Heißklebstoffe oder UV-härtbare Klebstoffe sind bei Zimmertemperatur fest und nicht klebrig, sodass das erwähnte Herausdrücken oder Herausquetschen von Klebstoffmasse weitgehend vermieden wird und selbst kleinste überstehende Klebstoffreste nicht klebrig sind und innerhalb der aufgerollten Folienbahn und/oder beim Verarbeiten der Folienbahn (Heißprägen, Kaltprägen) keine Verschmutzungen verursachten.

Die Erfindung beruht auf der Erkenntnis, dass beim erfindungsgemäßen Verbinden der ersten und zweiten Folienbahn keine Beeinträchtigung derselben erfolgt, auch wenn diese als Heißprägefolie ausgebildet sind. Insbesondere kann auch noch im Bereich einer Verbindungsstelle zwischen den Folienbahnenden aus der zuunterst liegenden Folienbahn oder an einer Nahtstelle aus beiden Folienbahnen geprägt werden, ohne dass das Vorhandensein der Verbindungsstelle an den geprägten Gegenständen in übermäßigem Maße erkennbar wäre. Es hat sich also gezeigt, dass die Qualität einer Prägung aus einem Bereich der Folienbahn mit Verbindungsstelle für sehr viele Anwendungsbereiche ausreichend ist, auch im Vergleich zu einer Prägung aus einem Bereich der Folienbahn ohne Verbindungsstelle.

Erfindungsgemäß wird der Klebstoff auf einem gesonderten (von den Folienbahnen verschiedenen) bandförmigen oder sonstwie geeignet geformten Träger bereitgestellt. Hier wird an die Technik der Verwendung eines Klebebandes an sich angeknüpft, auch wenn ein Heißklebstoff oder strahlungshärtbarer Klebstoff eingesetzt wird. Das Bereitstellen des Klebstoffs auf einem Träger ist eine besonders komfortable Art und Weise, weil der Klebstoff zusammen mit dem Träger bevorratet werden kann.

Der bandförmige Träger kann hierbei bevorzugt transparent sein und insbesondere aus einem Material bestehen, welches Polyethylenterephthalat (PET) oder Polyester umfasst. Als weitere mögliche Materialien für den bandförmigen Träger als auch für die Folienbahnen kommen in Betracht: Polyethylenterephthalat (PET), BOPP-Folien (BOPP = Biaxially Oriented Polypropylene), PET-G, PVC, PC, PP, PS, PEN, ABS, synthetisches Papier oder ein Laminatverbund von zwei oder mehreren solche Schichten (PET-G = PET mit Glycol; PVC = Polyvinylchlorid; PC = Polycarbonat; PP = Polypropylen; PS = Polystyrol; PEN = Polyethylennaphthalat; ABS = Acrylnitril-Butadien-Styrol-Copolymerisat). Aufgrund der Transparenz des bandförmigen Trägers lässt sich, auch wenn der Träger an der zusammengesetzten Folienbahn noch vorhanden sein sollte, durch den Träger hindurch ein Muster erkennen, um so passergenau auch im Bereich der Verbindungsstelle zwischen den Folienbahnen prägen zu können. Werden Kaltprägefolien als Folienbahnen miteinander verbunden, dann lässt sich beim Kaltprägen durch den transparenten bandförmigen Träger hindurch z. B. mit UV-Strahlung in ausreichender Stärke belichten.

PET eignet sich in besonderer Weise für den bandförmigen Träger, weil auch die Folienbahnen typischerweise einen Träger aus PET umfassen.

Dies lässt sich auch so formulieren, dass die Dehnungskoeffizienten eines an der Verbindungsstelle zwischen den Folienbahnen zu applizierenden bandförmigen Trägers und der Folienbahnen sich nicht mehr als 50 %, bevorzugt nicht mehr als 20 % und besonders bevorzugt nicht mehr als 10 % voneinander unterscheiden sollen, damit eine Verbindungsstelle besonders zugfest ist.

Bei einer weiteren bevorzugten Ausführungsform weist der bandförmige Träger eine Dicke zwischen 5 µm und 50 µm, bevorzugt von zwischen 8 µm und 20µm, besonders bevorzugt von zwischen 10 µm und 15 µm auf. Die Klebstoffschicht darauf ist hierbei zwischen 1 µm und 5 µm dick, bevorzugt zwischen 2 µm und 3 µm dick.

Bei den genannten geringen Dicken (etwa bei einer Dicke 12 µm mit Klebstoffschicht von 3 µm und insgesamt 15 µm) stört der bandförmige Träger beim Prägen kaum noch, selbst wenn er Teil der fertigen gesamten Folienbahn wird.

Bei dem Verfahren, bei dem der Klebstoff auf einem Trägerband bereitgestellt wird, sind verschiedene Varianten möglich:
Bei einer ersten Variante werden die beiden Folienbahnen vor einem Anbringen des bandförmigen Trägers derart geschnitten und positioniert, dass sie einander anstoßen (auf Stoß gebracht werden) und dass der bandförmige Träger auf die aneinander anstoßenden Enden der Folienbahnen überlappend aufgesetzt wird und sodann der Klebstoff aktiviert wird, sodass der bandförmige Träger auf beiden Folienbahnen klebt.

Hier wird an die Technik der Verwendung eines herkömmlichen Klebebands mit Kaltklebstoff angeknüpft, aber wegen der vorliegenden Verwendung eines Heißklebstoffes oder strahlungshärtbaren Klebstoffs für einen besonders guten Halt bei vergleichsweise geringem Materialeinsatz gesorgt. Beispielsweise kann ein verbesserter Halt auch bei besonders dünnen bandförmigen Trägern (siehe die oben genannten geringen Werte für die Dicke) gewährleistet werden.

Bevorzugt werden bei dieser Variante die beiden Folienbahnen zunächst einander überlappend gelegt, es wird im Bereich des Überlapps anschließend ein Schnitt durch beide Folienbahnen gesetzt (wobei der Schnitt insbesondere mit Hilfe eines Messers, einer Rasierklinge, eines Schneidrollers, einer Schere, eines Stanzmessers, mittels Lasers oder Ultraschall gesetzt wird), und nach dem Setzen des Schnitts werden die so entstehenden abgeschnittenen Folienbahnenden entfernt.

Durch das Schneiden der Folienbahnen vor dem Verbinden kann insbesondere eine definierte Verbindungsstelle mehr oder weniger nahtlos geschaffen werden. Gegebenenfalls kann hier sogar für Passergenauigkeit im Bereich der Verbindungsstelle gesorgt werden, sodass man die Verbindung als solche gar nicht mehr feststellt. Unter Passergenauigkeit, auch Registergenauigkeit genannt, ist eine relative Lagegenauigkeit insbesondere der Verbindungsstellen zueinander zu verstehen. Die Lagegenauigkeit soll sich dabei innerhalb einer sehr geringen Toleranz bewegen, üblicherweise im zweistelligen, max. dreistelligen Mikrometer-Bereich. Der Begriff ist abgeleitet vom Begriff "Passer" bzw. "Passermarke", worunter eine optische Markierung zu verstehen ist, anhand derer eine Abweichung von der o. g. Toleranz optisch besonders gut erkennbar ist. Beispielsweise können Passermarken zwei überlappende Kreise, Kreuze, Dreiecke oder Kombinationen davon sein. Passermarken werden auch Registermarken genannt.

Unter Abwandlung der ersten Variante können die Folienbahnen vor einem Anbringen des bandförmigen Trägers auch nach dem Schneiden so positioniert werden, dass sie leicht überlappen, um wenige Millimeter (z. B. zwischen 0,5 und 4 mm). In diesem Fall wird der bandförmige Träger auf die einander überlappenden Enden der Folienbahnen weiter überlappend aufgesetzt und sodann der Klebstoff aktiviert. Beim Aktivieren etwa durch Heißprägen des bandförmigen Trägers wird hierbei nicht nur der Klebstoff an dem bandförmigen Träger aktiviert sondern auch ggf. vorhandener Heißklebstoff des darunter liegenden Folienbandes. Vorteilhaft ist es, dass das überlappende Folienbahnende des unteren überlappenden Folienbahnendes an der Klebstoffschicht des oberen überlappenden Folienbahnendes angeklebt wird.

Bei der ersten Variante auch in der genannten Abwandlung wird ferner bevorzugt ein mit Silikon beschichtetes blattförmiges Element mit sehr geringer oberflächlicher Adhäsion, insbesondere ein silikonbeschichtetes Papier(blatt), nach dem Schneiden und vor dem Positionieren unter die beiden Folienbahnenden gelegt. Dies ist insbesondere dann von Vorteil, wenn man es mit einem Heißklebstoff zu tun hat, der also unter Zufuhr von Wärme und Druck aktiviert wird. Dann verhindert das mit Silikon beschichtete Element bzw. Papier, dass die zusammengefügte Folienbahn auf einem Untergrund haftet. Bevorzugt erfolgt bei der vorgenannten ersten Variante (wie auch bei den nachfolgend genannten weiteren Varianten) das Aktivieren bei Verwendung eines Heißklebstoffes unter Einsatz eines translatorisch bewegbaren Hubstempel, einer rotatorisch bewegbaren Heizwalze, oder eines translatorisch und rotatorisch bewegbaren Abrollstempels. Diese Werkzeuge sind besonders vorteilhaft einsetzbar.

Bei einer zweiten Variante des Verfahrens, bei dem ein Trägerband mit Klebstoff verwendet wird, trägt der bandförmige Träger beidseitig Klebstoff. Es werden die Folienbahnenden einander überlappend angeordnet und der bandförmige Träger wird im Bereich des Überlapps zwischen die Folienbahnenden gelegt. Gegebenenfalls wird vor der Positionierung des Trägers zwischen den Folienbahnenden von dem Träger noch ein Schutz zum Schutz der Klebstoffschicht, beispielsweise eine Silikonlage, entfernt. Anschließend wird der Klebstoff auf beiden Seiten des Trägers aktiviert, sodass der bandförmige Träger zwischen beiden Folienbahnenden klebt, sodass diese miteinander verbunden sind. Bei dieser Technologie ist für einen sehr zuverlässigen Halt und eine hohe Zugfestigkeit gesorgt.

Bei einer dritten Variante der Ausführungsform mit nur auf seiner unteren Seite Klebstoff tragendem Trägerband werden die Folienbahnenden einander überlappend angeordnet, und der bandförmige Träger wird im Bereich des Überlapps zwischen die Folienbahnenden gelegt. Sodann wird mit Hilfe eines Heißprägewerkzeugs (Hubstempel, Heizwalze, Abrollstempel etc.) bewirkt, dass die Dekorlage der ersten Folienbahn auf den bandförmigen Träger, insbesondere seine obere Seite, übertragen wird und der Klebstoff sich von der unteren Seite des bandförmigen Trägers löst und auf die zweite Folienbahn übertragen wird. Anschließend wird der bandförmige Träger aus dem Überlapp herausgenommen, und sodann wird nochmals ein Heißprägewerkzeug (oder alternativ UV-Strahlung oder sonstige energiereiche Strahlen) verwendet, um die Folienbahnenden im Bereich des Überlapps aneinander zu kleben und somit miteinander zu verbinden. Die Seite der ersten Folienbahn mit entfernter Dekorlage weist zu der mit Klebstoff versehenen Seite der zweiten Folienbahn. Dabei wird nun der auf die zweite Folienbahn übertragene Klebstoff aktiviert, wobei die erste Folienbahn im Überlapp ohne Dekorlage mit Hilfe des Klebstoffs an der zweiten Folienbahn im Bereich des Überlapps fest haftet.

Auf diese Weise erhält man an der Verbindungsstelle nur eine Dekorlage, nämlich die der zuunterst liegenden Folienbahn. Dadurch kann, wenn es sich bei der Folienbahn um eine Kaltprägefolie handelt, das Kaltprägen leichter durchgeführt werden, weil nicht durch die obere Dekorlage hindurch (UV-)Licht gelangen muss und dadurch zu stark abgeschwächt würde.

Wie schon ausgeführt, eignet sich das erfindungsgemäße Verfahren in allen Ausführungsformen insbesondere für den Fall, dass die Folienbahnen, welche miteinander zu verbinden sind, eine Heißprägefolie oder eine Kaltprägefolie bereitstellen.

Bei der bevorzugten Ausbildung des Verfahrens in allen Ausführungsformen wird beim Verbinden der Folienbahnen jeweils ein bzw. eine auf beiden Folienbahnen befindliche(s) Muster oder Markierung berücksichtigt, damit die jeweiligen Muster oder Markierungen passergenau bzw. lagegenau zueinander angeordnet sind. Auf diese Weise kann für eine Kontinuität der Muster oder Markierungen über die Verbindungsstelle zwischen den beiden Folienbahnen hinweg gesorgt werden. Es kann an bekannte Techniken zur Erfassung derartiger Muster oder Markierungen, z. B. mit optischen Sensoren und Kameras oder durch direkte Mustererfassung etwa von Passermarken bzw. Registermarken, angeknüpft werden.

Das erfindungsgemäße Verfahren kann automatisch oder teilautomatisch oder manuell während der jeweiligen Verarbeitung oder Anwendung der Folienbahn, z. B. in einer Folienapplikationsmaschine oder in einer Folienherstellungsmaschine erfolgen. Dafür ist es vorteilhaft, wenn die Laufgeschwindigkeit der Folienbahn innerhalb der jeweiligen Maschine derartig verlangsamt wird, dass ein erfindungsgemäßes Verbinden der Folienbahnen erfolgen kann. Dabei wird die Laufgeschwindigkeit bevorzugt lediglich verlangsamt, jedoch ein vollständiger Stopp vermieden, sodass trotz des Spleißens eine kontinuierliche Verarbeitung der Folienbahn stattfinden kann. Nach dem Spleißen bzw. Verbinden der Folienbahnen kann wieder auf die ursprüngliche Laufgeschwindigkeit beschleunigt werden. Alternativ dazu ist es aber auch möglich, das erfindungsgemäße Verfahren bei stillstehender, also gestoppter Folienbahn durchzuführen oder in einer weiteren Alternative bei nicht verlangsamter, d. h. voller Laufgeschwindigkeit der jeweiligen Maschine.

Ferner wird eine Vorrichtung zum Durchführen des Verfahrens beschrieben. Diese weist von einer Steuereinrichtung gesteuerte Mittel zum Bewegen und/oder Spannen und/oder Schneiden von Folienbahnenden zumindest einer von zwei Folienbahnen auf und eine Einrichtung zum Erfassen der Position von Mustern und/oder Markierungen, wobei die Steuereinrichtung ausgelegt ist, das Bewegen, Spannen und/oder Schneiden in Anhängigkeit von einer erfassten Position zu bewirken. Das Erfassen der Position kann optisch erfolgen.

Durch die Vorrichtung wird somit die Durchführung des Verfahrens in der bevorzugten Variante ermöglicht, dass für eine Passergenauigkeit auch im Bereich der Verbindungsstelle zwischen den Folienbahnen gesorgt wird.

Die Vorrichtung kann bevorzugt an einer Folienabwickeleinrichtung, beispielsweise in einer Druckmaschine oder Kaschiermaschine oder Laminiermaschine oder Heißprägemaschine oder Kaltprägemaschine angeordnet sein. Dort werden Folienbahnen der entsprechenden Maschine für die weitere Verarbeitung zugeführt. Es ist vorteilhaft, das Verbinden der Folienbahnen dort durchzuführen, sodass der weitere Verarbeitungsprozess so wenig wie möglich gestört wird bzw. in diesen Verarbeitungsprozess so wenig wie möglich eingegriffen werden muss. Eine Geschwindigkeitsregelung der Folienabwickeleinrichtung ist so ebenfalls besonders einfach möglich. So kann die Folienabwickeleinrichtung mit einfachen Mitteln verlangsamt oder gestoppt werden, um das Verbinden der Folienbahnen zu erleichtern, und kann nach dem erfolgten Verbinden der Folienbahnen ebenso einfach wieder beschleunigt oder gestartet werden. Beispielsweise geschieht dies durch eine sowieso vorhandene elektronische Motorsteuerung, die gegebenenfalls auch andere Antriebe oder Verarbeitungsmodule der jeweiligen Maschine ansteuern kann, um die sich ändernde Verarbeitungsgeschwindigkeit zu synchronisieren. Ebenso kann die Vorrichtung an einer Folienherstellungsmaschine eingesetzt werden, um die dort hergestellten Folien in ihrer Lauflänge an bestimmte Erfordernisse anzupassen. So können z. B. einzelne Folienbahnen unterschiedlicher, getrennter Produktionsläufe zu einer gemeinsamen Folienbahn auf einer gemeinsamen Rolle verbunden werden. Dies kann insbesondere dafür erfolgen, um eine weitere Verarbeitung der Folienbahn zu erleichtern.

Die Aufgabe wird ferner durch das Bereitstellen einer Folienbahn gelöst, welche in einem ersten Aspekt eine Trägerfolie und eine Dekorlage (insbesondere Metallschicht und/oder Farbschicht) umfasst und aus zumindest zwei Teilfolienbahnen zusammengesetzt ist, die an zwei jeweiligen Teilfolienbahnenden miteinander mittels eines beim Verbinden durch Zufuhr von Wärme oder durch Zufuhr von Strahlung (ultraviolettes Licht, blaues Licht, Ionen etc.) aktivierten Klebstoffs verbunden sind.

Eine solche Folienbahn ist durch Anwendung des erfindungsgemäßen Verfahrens erhältlich.
Die Aufgabe wird auch in einem zweiten Aspekt durch eine Folienbahn gelöst, die eine Trägerfolie und eine Dekorlage (insbesondere Metallschicht und/oder Farbschicht) umfasst, und aus zumindest zwei Teilfolienbahnen zusammengesetzt ist, welche an zwei jeweiligen Teilfolienbahnenden miteinander durch ein (insbesondere transparentes) Band, vorzugsweise aus einem Material, das Polyethylenterephthalat (PET) umfasst, in einer Dicke von zwischen 5 µm und 100 µm, bevorzugt zwischen 10 µm und 15 µm miteinander verbunden sind. Die zuletzt genannte Folienbahn kann insbesondere die Eigenschaften der zuerst genannten Folienbahn umfassen.

Bei der Folienbahn gemäß dem zweiten Aspekt wird ein relativ dünnes transparentes Band im Verbindungsbereich zwischen den Teilfolienbahnen bereitgestellt. Dies wird insbesondere dadurch ermöglicht, dass das erfindungsgemäße Verfahren eingesetzt wird, das sich auf diese Ausführungsform bezieht. Insbesondere in Verbindung mit dem ersten Aspekt (Heißklebstoff oder strahlungshärtbarer Klebstoff) kann hierbei an der Verbindungsstelle eine ausreichende Zugfestigkeit bereitgestellt werden.

Nachfolgend werden bevorzugte Ausführungsformen der Erfindung und der Bezug auf Zeichnung näher erläutert, in der
- Fig. 1: den Aufbau einer Folienbahn veranschaulicht, die mit einer gleichartigen Folienbahn zu einer Gesamtfolienbahn verbunden werden soll;
- Fig. 2a bis 2c: zur Erläuterung der Schritte einer ersten Ausführungsform des erfindungsgemäßen Verfahrens dienen;
- Fig. 3a bis 3f: zur Erläuterung der Schritte einer zweiten Ausführungsform des erfindungsgemäßen Verfahrens dienen;
- Fig. 4a bis 4f: zur Erläuterung der Schritte einer dritten Ausführungsform des erfindungsgemäßen Verfahrens dienen;
- Fig. 5a bis 5h, 5j, 5k: zur Erläuterung der Schritte einer vierten Ausführungsform des erfindungsgemäßen Verfahrens dienen;
- Fig. 6a bis 6h: zur Erläuterung der Schritte einer fünften Ausführungsform des erfindungsgemäßen Verfahrens dienen;
- Fig. 7a und 7g: zur Erläuterung der Schritte einer sechsten Ausführungsform des erfindungsgemäßen Verfahrens dienen;

Eine im Ganzen mit 1 bezeichnete Folienbahn soll mit einer gleichartigen Folienbahn, die nachfolgend mit 2 bezeichnet wird, zu einer Gesamtfolienbahn verbunden werden.

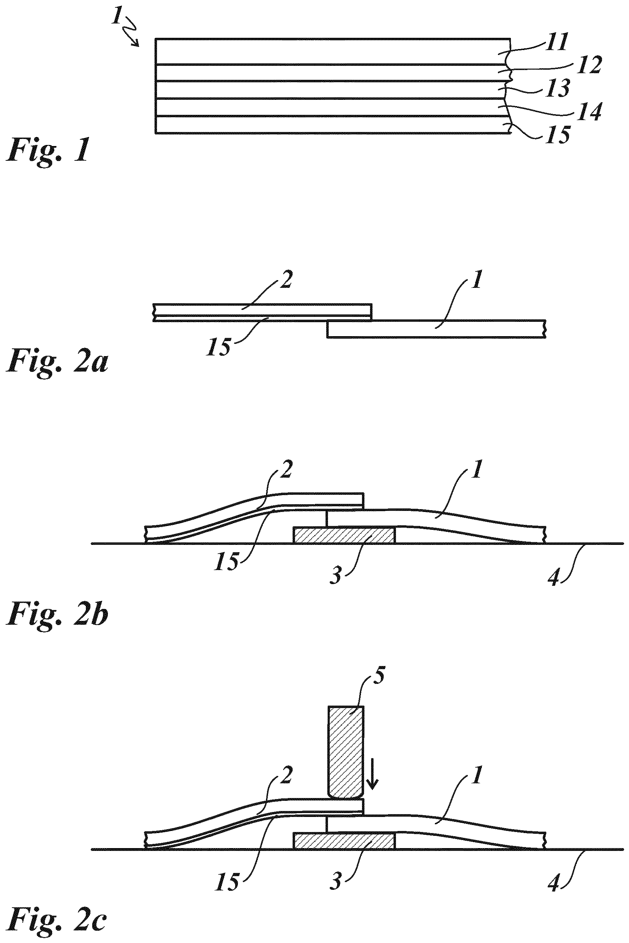

Die Folienbahnen haben jeweils einen Schichtaufbau, wie er in Figur 1 erläutert ist:
Auf einer jeweiligen Oberseite befindet sich eine Trägerfolie 11, z. B. Polyethylenterephthalat (PET) in einer Schichtdicke von zwischen 5 µm und 500 µm. Auf der Trägerfolie 11 befindet sich eine Ablöseschicht 12, die dazu dient, die weiteren Schichten 13, 14, 15 leichter von der Trägerfolie 11 ablösen zu können. Beispielsweise besteht die Ablöseschicht aus einem Wachs. Die Schicht 13 ist eine Schutzschicht und besteht beispielsweise aus Acrylatlack oder Acrylatlack-Gemisch, thermisch trocknend und/oder UV-gehärtet. Auf die Schutzschicht 13 folgt eine Metallschicht 14, z. B. aus Aluminium oder Chrom oder Kupfer. Die äußerste, zu unterst liegende Schicht 15 ist eine Kleberschicht aus einem vorzugsweise wärmeaktivierbaren Kleber, wenn es sich bei der Folienbahn 1 um eine Heißprägefolie handeln soll. Die Schicht 15 ist eine so genannte Haftvermittler- oder Primerschicht aus einem vorzugsweise wärmeaktivierbaren Kleber, die mit einem (UV-härtbaren) Klebstoff zusammenwirken kann, wenn es sich bei der Folienbahn 1 um eine Kaltprägefolie handelt.

Bei einer ersten Ausführungsform des Verfahrens werden zunächst die beiden Folienbahnen 1 und 2 mit ihren Folienbahnenden einander überlappend gelegt (Fig. 2a). Unter die Folienbahnenden wird ein mit Silikon beschichtetes Papier 3, mit der mit Silikon beschichteten Seite zuoberst, gelegt, damit die Folienbahnenden nicht am Untergrund haften (Fig. 2b). (Dieser Schritt ist optional.)

Die Folienbahnenden werden nun gespannt und auf dem Untergrund 4 festgelegt. Dies kann beispielsweise unter Zuhilfenahme von Vakuum erfolgen, wenn der Untergrund 4 kleine (nicht in der Figur gezeigte) Perforationen aufweist, durch die die Folienbahnenden angesogen werden. Die Folienbahnenden können auch an den bezüglich ihrer Längserstreckung seitlichen Ecken bzw. Kanten festgehalten und mit Hilfe einer Spannvorrichtung wie etwa eines Spannbalkens gespannt werden. Das Spannen und Festlegen auf dem Untergrund kann ferner auch unter Nutzung elektrostatischer Kräfte erfolgen. Schließlich können Vakuum, Spannbalken oder elektrostatische Kräfte auch miteinander in Kombination eingesetzt werden.

Wesentlich ist, dass bei der Anordnung gemäß Figur 2b die Folienenden so fest liegen bzw. gehalten sind, dass sie bei einer äußeren Krafteinwirkung, wie nachfolgend vorgesehen, ihre Lage nicht oder nur unwesentlich verändern. Im anschließenden Schritt (Fig. 2c) wird ein Heißprägewerkzeug 5, vorliegend gezeigt als Hubstempel, alternativ eine Heizwalze oder ein Abrollstempel, gegen die obere Folienbahn 2 gedrückt. Hierbei wird, wie beim Heißprägen üblich, das Heißprägewerkzeug erwärmt, und seine Wärme wird auf die obere Folienbahn 2 übertragen, sodass die Klebstoffschicht 15 (oder ggf. bei einer Kaltprägebahn die Primerschicht 15) aktiviert wird, also klebend wird, sodass die beiden Folienbahnenden der Folienbahn 1 und 2 miteinander verklebt werden und aneinander haften.
Das Heißprägewerkzeug wird auf eine Temperatur von 80° C bis 140° C gebracht, z. B. von 110° C und über eine Zeitdauer von 1 bis 2 Sekunden appliziert. Wesentlich ist, dass lediglich die Klebstoffschicht 15 aktiviert wird, nicht aber etwa die Trägerfolie 11 zum Schmelzen oder Schrumpfen gebracht wird. Vor dem Heißprägen ist ein Vorwärmen der Prägestelle auf der Folienbahn und/oder des Heißprägewerkzeugs mittels Heißluft oder Heizstrahlern möglich, um beim Schaffen der Verbindung das Heißprägewerkzeug nur relativ kurz applizieren zu können. Man nutzt die obere Folienbahn in ihrer Eigenschaft als Prägefolie, um die Verbindung zwischen der oberen Folienbahn 2 und der unteren Folienbahn 1 herzustellen.

Das Silikonpapier 3 wird anschließend entfernt, und es ist eine gute Verbindung zwischen den beiden Folienbahnen 1 und 2 gegeben. Die Zugbelastung ist insbesondere bei ausreichend dicker Trägerfolie 11 (zwischen 12 und 20 µm, z. B. 19 µm dick) und einer ausreichenden Menge an Klebstoff in der Klebstoffschicht 15 gewährleistet. Beispielsweise kann die Klebstoffschicht 15 mehr als 5 µm dick sein (z. B. 8 µm). Dies entspricht einer selben Zahl von g/m², also beispielsweise 8 g/m².

Die vorliegend erste Ausführungsform des Verfahrens hat den Vorteil, dass bei einem nachfolgenden Heißprägen der Prägestempel nicht verschmutzt wird.

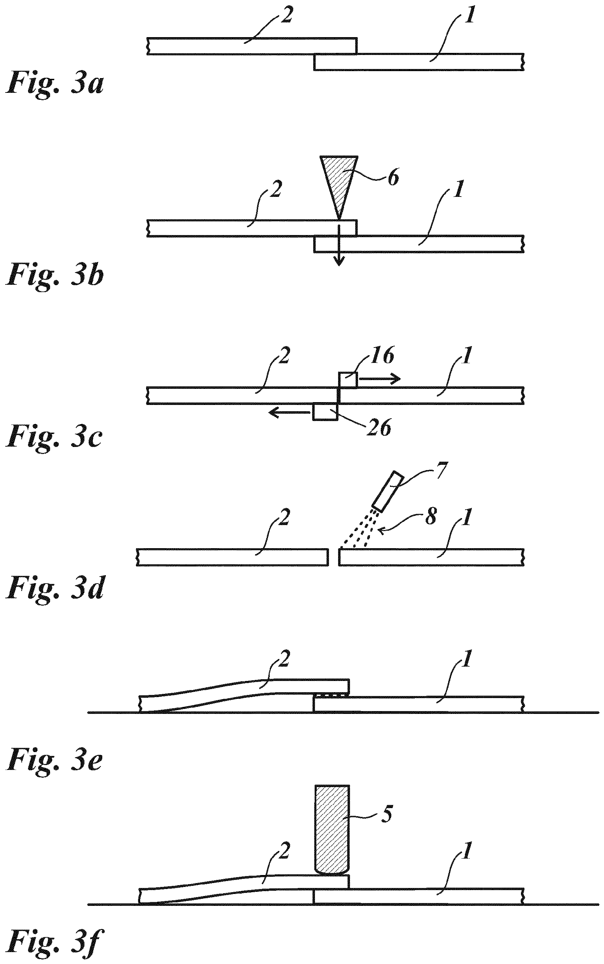

Bei einer zweiten Ausführungsform des Verfahrens werden zunächst gemäß Figur 3a die Folienbahnenden der Folienbahn 1 und 2 wieder auf Überlapp gelegt. Sodann werden die Folienbahnenden auf die oben beschriebene Art und Weise gespannt und auf dem Untergrund festgelegt. Wie in Figur 3b gezeigt, wird sodann ein Schneidwerkzeug 6 appliziert, beispielsweise ein Messer, eine Rasierklinge, ein Schneidroller, eine Schere, ein Stanzmesser. Alternativ könnten auch ein Laserstrahl oder Ultraschallwellen appliziert werden. Das Schneiden unter einem bestimmten Anstellwinkel des Schneidmessers, des Laserstrahls usw. ungleich 90° relativ zur Oberfläche der Folienbahn ist ebenfalls möglich, sodass an der Schnittstelle ein schräger Anschnitt entsteht.
Die beiden Folienbahnenden der Folienbahnen 1 und 2 werden insbesondere gleichzeitig geschnitten, sodass die Folienbahnenden dann auf Stoß liegen. Die verbleibenden Folienbahnendstücke 16 und 26 werden entfernt, siehe Figur 3c. Beim Legen auf Stoß können bei einem schrägen Anschnitt die beiden Schrägen ineinander greifen.

Sodann wird auf die eine Folienbahn 1, die später als untere Folienbahn 1 fungiert, mithilfe eines Sprühwerkzeugs 7 Klebstoff 8 aufgesprüht. Andere Aufbringungsmöglichkeiten wie Aufrakeln, Aufstreichen, Aufdrucken sind ebenfalls möglich. Von der anderen Folienbahn 2 können die unteren Schichten manuell, z. B. mithilfe eines Klebebandes, entfernt, also abgezogen werden (optional). Legt man nun gemäß Figur 3e das Folienbahnende von der Folienbahn 2 auf das Folienbahnende der Folienbahn 1 und appliziert sodann ein Heißprägewerkzeug 5 wie in Fig. 3f gezeigt, so wird der zuvor aufgesprühte Klebstoff 8 aktiviert, und die beiden Folienbahnen 1 und 2 werden miteinander verklebt.

Insbesondere, wenn die Transferlagen des Folienbahnendes der Folienbahn 2 manuell entfernt werden, hat man auf der fertigen Folienbahn im Bereich der Verbindungsstelle nur noch eine Metallschicht (als Teil der Dekorlage der Folienbahn 2), sodass insbesondere eine UV-Belichtung beim Kaltprägen im Spleißbereich erleichtert ist.

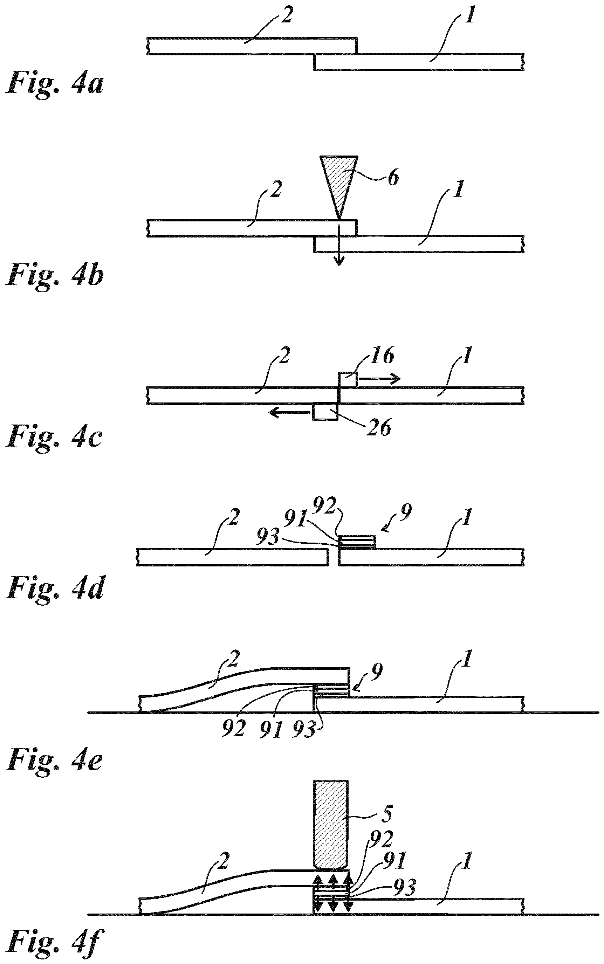

Bei einer dritten Ausführungsform des Verfahrens werden zunächst dieselben Schritte durchgeführt wie bei der zweiten Ausführungsform des Verfahrens, die Figuren 4a bis 4c entsprechen den Figuren 3a bis 3c. Der Klebstoff wird vorliegend aber nicht in flüssiger Form aufgebracht, sondern in fester Form mithilfe eines Trägers 9, siehe Figur 4d. Der Träger 9 kann einen Grundkörper 91 aufweisen, auf dem beidseitig Klebstoffschichten 92 und 93 von z. B. zwischen 1 µm und 6 µm Dicke aufgebracht sind. Die Klebstoffschichten können ihrerseits mit einer Schutzschicht abgedeckt sein, die in Figur 4d allerdings bereits entfernt ist. Eine solche Schutzschicht kann beispielsweise eine dünne Silikonpapier-Schicht sein.

Bei der Situation gemäß Figur 4d klebt der Träger 9 wegen des Vorhandenseins der Klebstoffschicht 93 auf der Folienbahn 1. Die obere Klebstoffschicht 92 ist freiliegend. Wird nun gemäß Figur 4e die Folienbahn 2 mit ihrem Folienbahnende auf den Träger 9 gesetzt, so kann auch die Folienbahn 2 mittels Klebstoffschicht 92 an dem Träger 9 und damit an der Folienbahn 1 kleben. Dies erfolgt vorliegend ebenfalls mithilfe eines Heißprägewerkzeuges 5, durch das der Klebstoff in den Klebstoffschichten 92 und 93 aktiviert wird, vgl. die Pfeile in Figur 4f.

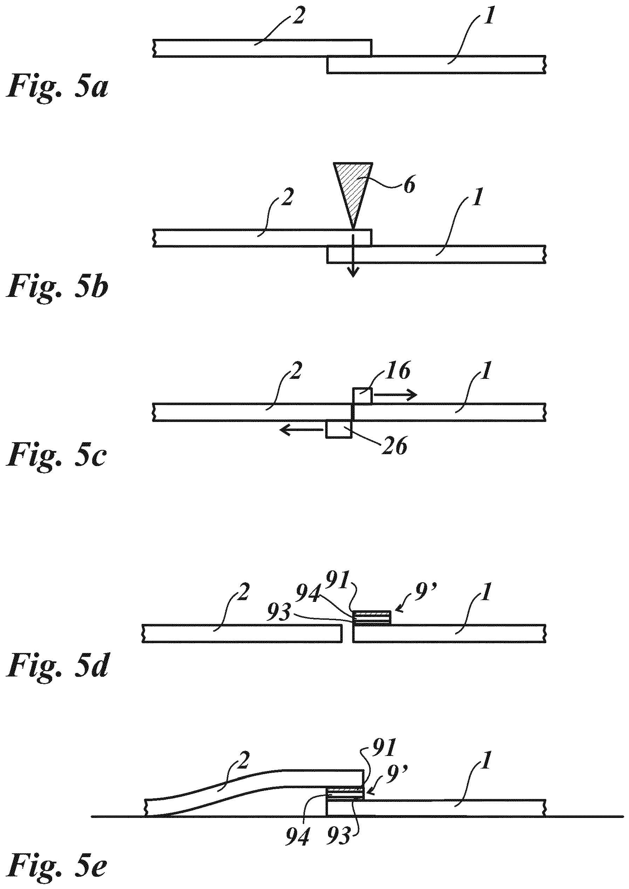

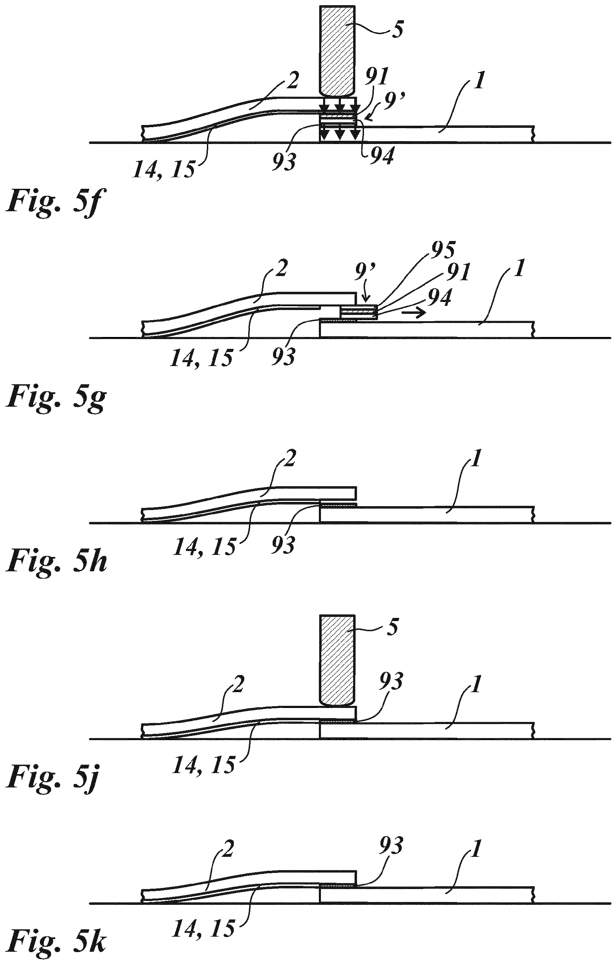

Bei einer vierten Ausführungsform des erfindungsgemäßen Verfahrens wird in Abwandlung der Ausführungsform gemäß den Figuren 4a bis 4f zunächst vorgegangen wie schon zu Figur 3a bis Figur 3c beschrieben. Es wird nun allerdings ein Träger 9' eingesetzt, der einen Grundkörper 91 aufweist, auf dem sich eine untere Klebstoffsschicht 93 befindet, mithilfe der der Träger 9' an der Folienbahn 1 klebt. Auf dem Grundkörper 91 befindet sich nun jedoch weiterhin eine Silikonbeschichtung 94 zwischen dem Grundkörper 91 und der Klebstoffschicht 93 Es wird nun auch hier gemäß Figur 5e die Folienbahn 2 mit ihrem Ende auf den Träger 9' gesetzt. Wird nun ein Heißprägewerkzeug 5 appliziert (Figur 5f), so wird zwar einerseits der Klebstoff in der Klebstoffschicht 93 aktiviert, siehe die unteren nach unten weisenden Pfeile. Gleichzeitig wird jedoch die Transferlage 14, 15 der Folienbahn 2 auf die Oberseite des Trägers 9' geprägt, siehe die oberen nach unten weisenden Pfeile. Wie anhand von Figur 5g zu erkennen, kann man anschließend den Träger 9' entfernen. Von diesem Träger 9' hat sich nunmehr der Klebstoff 93 gelöst, dafür aber befindet sich die Transferlage 95 des Folienbahnendes der Folienbahn 2 auf der Oberseite des Trägers 9'.

Nach dem Entfernen des Trägers 9' kann man nun die Folienbahn 2 mit ihrem Folienbahnende auf die Folienbahn 1 legen, siehe Figur 5g, und wenn anschließend mithilfe eines Heißprägewerkzeuges 5 die Klebstoffschicht 93 aktiviert wird (Fig. 5h), kommt es zu einer Klebeverbindung gemäß Figur 5k.

Bei dieser Ausführungsform ist in erhöhtem Maße gewährleistet, dass im Bereich der Verbindungsstelle (Spleißbereich) nur eine Metallschicht vorhanden ist, nämlich die Metallschicht der Transferlage der unteren Folienbahn 1. Dadurch kann insbesondere beim Kaltprägen auch eine UV-Aktivierung des Klebstoffs der unteren Folienbahn 1 durch die Metallschicht hindurch erfolgen. Beim Heißprägen der unteren Folienbahn 1 ist dafür gesorgt, dass der Heißklebstoff der unteren Folienbahn 1 den Heißprägestempel nicht verschmutzt.

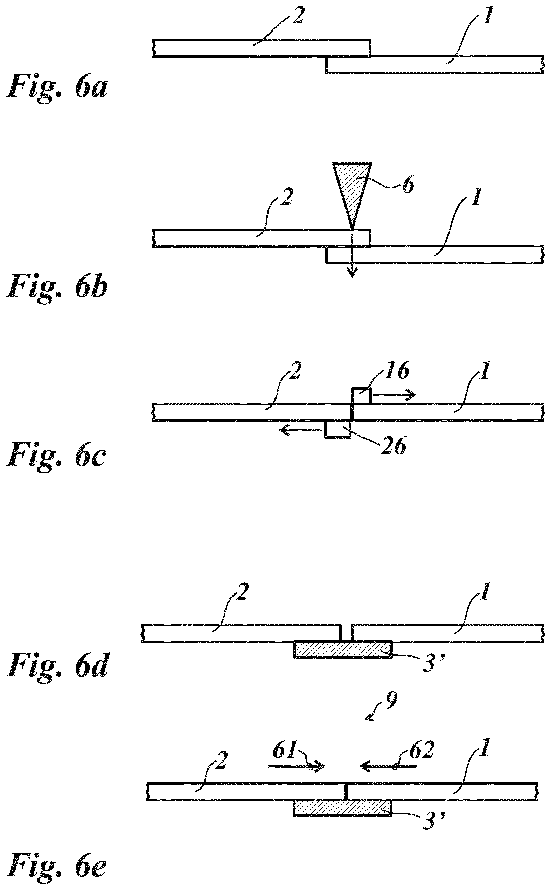

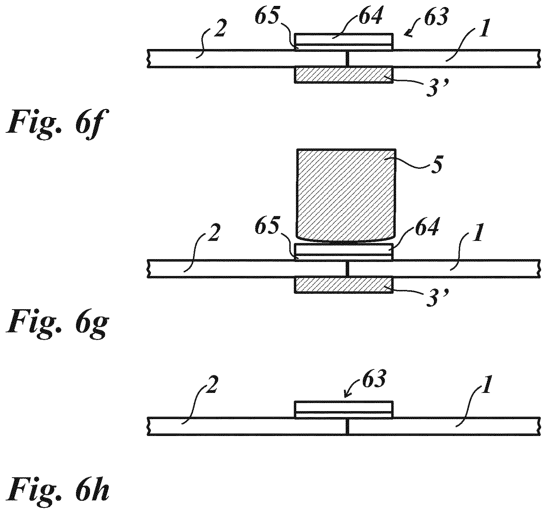

Bei einer fünften Ausführungsform des Verfahrens wird zunächst gemäß Figur 6a bis 6c vorgegangen wie zu den Figuren 3a bis 3c erläutert. Nun wird ein mit Silikon beschichtetes Papier 3' unter die abgeschnittenen Folienbahnenden der Folienbahn 1 und 2 gelegt. Dadurch wird verhindert, dass die Folienbahnenden 1 und 2 am Untergrund haften. Optional werden nun gemäß Figur 6e, siehe die Pfeile 61 und 62, die Folienbahnen 1 und 2 nachpositioniert, damit der dazwischenliegende Spalt minimal ist, weniger als 1 mm. Anders als bei dem bisher beschriebenen Ausführungsformen ist bei der vorliegenden fünften Ausführungsform kein Überlapp zwischen den Folienbahnenden mehr vorgesehen, sondern die Folienbahnenden stoßen einander an, liegen "auf Stoß".
Gemäß Figur 6f wird nun ein Heißklebeband 63 über der Schnittstelle bzw. Stoßstelle positioniert.

Das Heißklebeband 63 umfasst einen PET-Träger 64 und eine Klebstoffschicht 65. Der PET-Träger 64 ist transparent und hat eine Dicke von zwischen 5 und 20 µm, z. B. von 12 µm. Die Klebstoffschicht 65 umfasst vorliegend einen thermisch aktivierbaren Klebstoff und ist ca. 3 µm dick (zwischen 2,5 und 3,5 µm). Insgesamt ist somit das Heißklebeband 63 ca. 15 µm dick. Sodann wird ein Heißprägewerkzeug 5 (Figur 6g) appliziert und der Klebstoff in der Klebstoffschicht 65 aktiviert. Dadurch klebt das Heißklebeband 63 nunmehr fest an den Folienbahnen 1 und 2. Nach Entfernung des Silikonpapiers 3' erhält man somit gemäß Figur 6h eine feste Verbindung zwischen den Folienbahnen 1 und 2 durch das Heißklebeband 63, das integraler Bestandteil der gesamten Folienbahn wird.

Durch das Vermeiden eines Überlapps ist es in verstärktem Maße ermöglicht, auch im Bereich der Verbindungsstelle (Spleißbereich) zu prägen. Dies gilt im besonderen Maße für Kaltprägen. Wegen der geringen Dicke des Heißklebebandes 63 sowie des nicht vorhandenen Überlapps der Folienbahnen 1 und 2 durch Ihre Positionierung "auf Stoß" macht sich die Spleißstelle auf der fertigen Folienbahn auch kaum in störender Art und Weise bemerkbar.

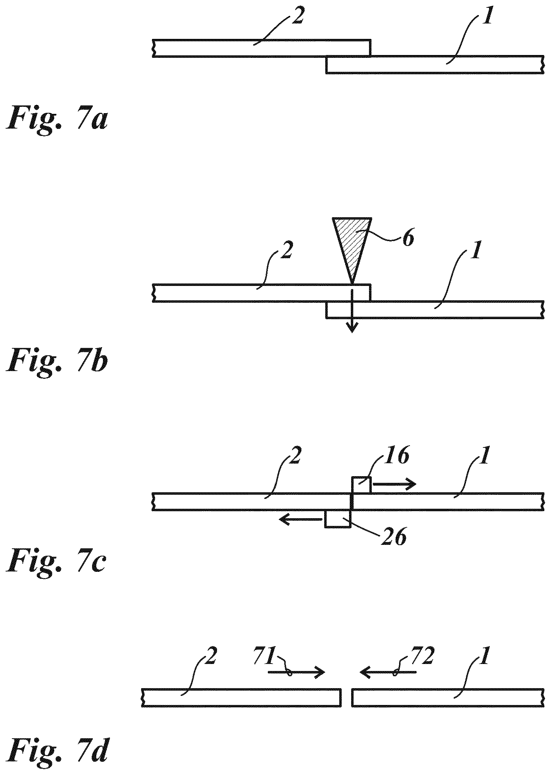

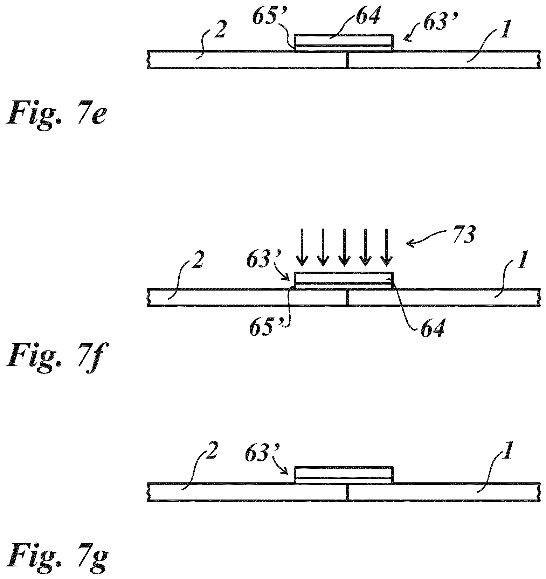

Bei einer sechsten Ausführungsform des Verfahrens wird zunächst vorgegangen wie bei der fünften Ausführungsform, allerdings wird auf das Unterlegen eines Silikonpapiers 3' vorliegend verzichtet, und es erfolgt bereits ohne ein solches Silikonpapier das Nachpositionieren gemäß Figur 7d, siehe die Pfeile 71 und 72, nachdem die Folienbahnen 1 und 2 an ihren Enden abgeschnitten sind.
Auch hier wird ein Klebeband 63' (siehe Figur 7e) auf die Schnittstelle aufgelegt, vorliegend umfasst dieses Klebeband denselben PET-Träger 64 wie das Klebeband 63 gemäß Figur 6f, allerdings auf diesem einen mit UV-Strahlung härtbaren Klebstoff 65'.

Entsprechend wird in Schritt 7f anstatt eines Heißprägewerkzeugs UV-Strahlung, siehe die Pfeile 73, eingestrahlt, und es wird eine feste Verbindung zwischen den Folienbahnen 1 und 2 geschaffen, siehe Figur 7g.

Bei allen genannten Verfahren kann durch Einsatz geeigneter Erfassungsmittel, z. B. optischer Erfassungsmittel wie etwa einer Kamera, dafür gesorgt werden, dass die Folienbahnen 1 und 2 passergenau miteinander verbunden werden, damit ein auf den Folienbahnen 1 und 2 befindliches Muster sich gewissermaßen kontinuierlich über die Spleißstelle hinweg fortsetzt.

Hierbei wird entweder das auf den Folienbahnen befindliche Muster unmittelbar erfasst, etwa durch die optischen Erfassungsmittel, und es wird durch geeignete Platzierung des Überlapps, bei dem zweiten bis sechsten Verfahren insbesondere zur Setzung der Schnittstelle, dafür gesorgt, dass die verbleibenden Teile der Folienbahnen 1 und 2 passergenau zueinander liegen. Passergenau bedeutet, dass einander entsprechende Musterbereiche jeweils in gleichen Abständen voneinander angeordnet sind, eben auch über die Spleißstelle hinweg.

Statt einer direkten Erfassung eines Musters auf den Folienbahnen können auf diesen auch Registermarken vorgesehen sein; es handelt sich hierbei um solche bewusst gesetzten Marken, die zur Platzierung der Folienbahn bei einem weiteren Bearbeitungsschritt dienen, vorliegend eben bei dem Verbinden zweier Folienbahnen 1 und 2 miteinander berücksichtigt werden. Registermarken können u. a. auch in Form von Ausstanzungen vorliegen, die dann durch eine mechanische Einrichtung oder auch optisch erfasst werden.

In der entsprechenden Vorrichtung sendet die Erfassungseinrichtung Messsignale an eine Steuereinrichtung, und diese steuert dann andere Einrichtungen bzw. Mittel geeignet an, damit die Folienbahnenden der beiden Folienbahnen 1 und 2 nach Herstellung der Verbindung passergenau zueinander angeordnet sind. Beispielsweise kann es sich um Mittel zum Bewegen der Folienbahnenden handeln, und die Bewegung erfolgt in Abhängigkeit von von der Einrichtung zum Erfassen der Position gewonnenen Signalen. Genauso können die Folienbahnenden auch alternativ oder zusätzlich geeignet gespannt werden, durch Mittel zum Spannen, und schließlich können die Folienbahnenden auch durch Mittel zum Schneiden in Abhängigkeit von den gewonnenen Messwerten so geschnitten werden, dass die Muster auf den Folienbahnen passergenau zueinander zu liegen kommen.

Mit Ausnahme der sechsten Ausführungsform erfolgt vorliegend das Verbinden mithilfe eines Heißklebestoffs.

Es gibt verschiedene Ansatzpunkte, welche Zusammensetzung dieser Heißklebstoff haben kann (Fp = Flammpunkt; Tg = Glasübergangstemperatur):

| 1. Zusammensetzung | | Gewichtsanteile (von 7500) |
|---|---|---|
| Toluol | | 2000 |
| Aceton | | 2100 |
| Hochmolekulares Ethylmethacrylat | Tg 60 °C | 300 |
| Methacrylatcopolymer | Tg 40°C - 80°C | 700 |
| Thermoplastisches Polyvinylacetat | Tg 80°C - 83°C | 200 |
| Ethanol | | 2100 |
| Hochdisperse Kieselsäure | | 100 |

| 2. Zusammensetzung | Gewichtsanteile (von 1030) |
|---|---|
| Methylethylketon | 280 |
| Toluol | 350 |
| PVC/PVAC-Copolymer (Fp 80 °C) | 210 |
| Thermoplastisches Polyurethan (Dichte = 1,18 g/cm³) | 130 |
| Kieselsäure, hydrophobiert (Partikelgröße ca. 10 µm) | 60 |

| 3. Zusammensetzung | Gewichtsanteile (von 1000) |
|---|---|
| Methylethylketon | 380 |
| Toluol | 400 |
| Ethylen-Vinylacetat-Terpolymer (Fp 66°C) | 60 |
| Ketonharz (Fp 85-90°C) | 80 |
| Vinylchlorid-/Vinylacetat-Copolymer (Fp 80°C) | 70 |
| Siliciumdioxid | 10 |

| 4. Zusammensetzung | Gewichtsanteile (von 1000) |
|---|---|
| Methylethylketon | 550 |
| Ethylacetat | 175 |
| Cyclohexanon | 50 |
| Polyurethanharz (Fp > 200°C) | 100 |
| Polyvinylchlorid Terpolymer (Tg = 90°C) | 120 |
| Siliciumdioxid | 5 |

Allen genannten Ausführungsformen des Verfahrens ist gemeinsam, dass die eigentliche Transferlage durch das Schaffen der Verbindung auch im Spleißbereich nicht bzw. allenfalls unwesentlich beeinträchtigt wird, sodass auch im Spleißbereich geprägt werden kann.

## Patentansprüche

1. Verfahren zum Verbinden von Folienbahnenden einer ersten Folienbahn (1) und einer zweiten Folienbahn (2), wobei die beiden Folienbahnen eine Transferfolie bereitstellen und eine Trägerfolie (11) und eine Dekorlage, insbesondere Metallschicht und/oder Farbschicht (14), umfassen,
wobei das Verbinden mittels eines Klebstoffs (15, 8, 92, 93, 65, 65') erfolgt, der in einem Grundzustand bei Zimmertemperatur deaktiviert ist und durch Zufuhr von Wärme oder durch Zufuhr von Strahlung aktivierbar ist und bei dem Verfahren aktiviert wird und wobei der Klebstoff auf einem gesonderten bandförmigen Träger (9, 9', 63, 63') bereitgestellt wird.

2. Verfahren nach Anspruch 1, bei dem der bandförmige Träger bevorzugt transparent ist und insbesondere aus Material besteht, welches Polyethylenterephthalat (PET) umfasst.

3. Verfahren nach einem der Ansprüche 1 oder 2, bei dem der bandförmige Träger eine Dicke von zwischen 5 µm und 100 µm, bevorzugt von zwischen 8 µm und 20 µm, besonders bevorzugt zwischen 10 µm und 15 µm aufweist und die Klebstoffschicht darauf zwischen 1µm und 5µm dick, bevorzugt zwischen 2 µm und 3 µm dick ist.

4. Verfahren nach einem der vorangehenden Ansprüche, bei dem die beiden Folienbahnen vor einem Anbringen des bandförmigen Trägers (63, 63') derart geschnitten und positioniert werden, dass sie aneinander anstoßen, und dass der bandförmige Träger (63, 63') auf die einander anstoßenden Enden der Folienbahnen (1, 2) aufgesetzt wird und sodann der Klebstoff (65, 65') aktiviert wird, sodass der bandförmige Träger (63, 63') auf beiden Folienbahnen (1, 2) klebt, wobei bevorzugt die beiden Folienbahnen (1, 2) einander überlappend gelegt werden und im Bereich des Überlapps ein Schnitt durch beide Folienbahnen gesetzt wird, insbesondere mithilfe eines Messers, einer Rasierklinge, eines Schneidrollers, einer Schere, eines Stanzmessers, mittels eines Lasers oder Ultraschalls gesetzt wird, und bei dem die so entstehenden abgeschnittenen Folienbahnenden (16, 26) entfernt werden.

5. Verfahren nach einem der Ansprüche 1 bis 3, bei dem der bandförmige Träger (9) beidseitig Klebstoff (92, 93) trägt und die Folienbahnenden einander überlappend angeordnet werden und der bandförmige Träger (9) im Bereich des Überlapps zwischen die Folienbahnenden gelegt wird und sodann der Klebstoff aktiviert wird, sodass der bandförmige Träger (9) zwischen beiden Folienbahnenden klebt.

6. Verfahren nach einem der Ansprüche 1 bis 3, bei dem die Folienbahnenden einander überlappend angeordnet werden und der bandförmige Träger (9') im Bereich des Überlapps zwischen die Folienbahnenden gelegt wird und mithilfe eines Heißprägewerkzeugs (5) bewirkt wird, dass die Dekorlage (14) der ersten Folienbahn (2) auf den bandförmigen Träger (9') übertragen wird und sich der Klebstoff (93) von dem bandförmigen Träger (9') löst und auf die zweite Folienbahn (1) übertragen wird, dass anschließend der bandförmige Träger (9') herausgenommen wird und sodann nochmals ein Heißprägewerkzeug (5) oder Strahlung appliziert wird, sodass die Folienbahnenden im Bereich des Überlapps aneinander kleben.

7. Verfahren nach einem der vorhergehenden Ansprüche, bei dem die Folienbahnen (1, 2) eine Heißprägefolie oder eine Kaltprägefolie bereitstellen.

8. Verfahren nach einem der vorhergehenden Ansprüche, bei dem beim Verbinden der Folienbahnen jeweils zumindest ein bzw. eine auf beiden Folienbahnen befindliche(s) Muster oder Markierung berücksichtigt wird, damit die jeweiligen Muster oder Markierungen passergenau zueinander angeordnet sind.

9. Folienbahn, umfassend eine Trägerfolie (11) und eine Dekorlage, insbesondere Metallschicht und/oder Farbschicht (14), und zusammengesetzt aus zumindest zwei Teilfolienbahnen (1, 2), die als Transferfolie ausgebildet sind und die an zwei jeweiligen Teilfolienbahnenden miteinander mittels eines beim Verbinden durch Zufuhr von Wärme oder durch Zufuhr von Strahlung aktivierten Klebstoffs (15, 8, 92, 93, 65, 65') verbunden sind.

10. Folienbahn nach Anspruch 9, umfassend eine Trägerfolie (11) und eine Dekorlage, insbesondere Metallschicht und/oder Farbschicht (14), und zusammengesetzt aus zumindest zwei Teilfolienbahnen (1, 2), die an zwei jeweiligen Teilfolienbahnenden durch ein, insbesondere transparentes, Band (63, 63'), vorzugsweise aus Material, welches Polyethylen umfasst, in einer Dicke von zwischen 8 und 20 µm, bevorzugt von zwischen 10 und 15 µm, miteinander verbunden sind.

## Claims

1. Method for connecting flm track ends of a first film track (1) and a second film track (2), wherein the two film tracks provide a transfer film and comprise a carrier film (11) and a decorative layer, in particular metal layer and/or colour layer (14),
wherein the connection takes place by means of an adhesive (15, 8, 92, 93, 65, 65'), which is deactivated in a base state at room temperature and is able to be activated by supplying heat or by supplying radiation and is activated in the method, and wherein the adhesive is provided on a separate band-shaped carrier (9, 9', 63, 63').

2. Method according to claim 1, wherein the band-shaped carrier is preferably transparent and in particular consists of material that comprises polyethylene terephthalate (PET).

3. Method according to one of claims 1 or 2, wherein the band-shaped carrier has a thickness of between 5 µm and 100 µm, preferably of between 8 µm and 20 µm, particularly preferably between 10 µm and 15 µm and the adhesive layer thereupon is between 1µm and 5µm thick, preferably between 2 µm and 3 µm thick.

4. Method according to one of the preceding claims, wherein the two film tracks are cut and positioned before applying the band-shaped carrier (63, 63') in such a way that they abut each other and the band-shaped carrier (63, 63') is placed on the ends of the film tracks (1, 2) abutting each other and then the adhesive (65, 65') is activated, such that the band-shaped carrier (63, 63') adheres to the two foil tracks (1, 2), wherein, preferably, the two foil tracks (1, 2) are positioned to overlap each other and, in the region of the overlap, a cut is made through two foil tracks, in particular is made by a knife, a razor blade, a cutting roller, a pair of scissors, a punch knife, by means of a laser or ultrasound, and wherein the resulting film track ends (16, 26) that have been cut off in this way are removed.

5. Method according to one of claims 1 to 3, wherein the band-shaped carrier (9) carries adhesive (92, 93) on both sides and the film track ends are arranged to overlap with each other and the band-shaped carrier (9) is placed in the region of the overlap between the film track ends and then the adhesive is activated, such that the band-shaped carrier (9) adheres between the two film track ends.

6. Method according to one of claims 1 to 3, wherein the film track ends are arranged to overlap each other and the band-shaped carrier (9') is placed in the region of the overlap between the film track ends and a hot stamping tool (5) causes the decorative layer (14) of the first film track (2) to be transferred onto the band-shaped carrier (9') and the adhesive (93) to be able to be detached from the band-shaped carrier (9') and to be transferred onto the second film track (1), then for the band-shaped carrier (9') to be removed and then a hot stamping device (5) or radiation to be applied once again such that the film track ends adhere to each other in the region of the overlap.

7. Method according to one of the preceding claims, wherein the film track ends (1, 2) provide a hot stamping film or a cold stamping film.

8. Method according to one of the preceding claims, wherein, when connecting the film tracks, in each case at least one pattern or marking on the two film tracks is taken into account so that the respective patterns or markings are arranged to be in perfect register with each other.

9. Film track, comprising a carrier film (11) and a decorative layer, in particular metal layer and/or colour layer (14), and made up of at least two partial film tracks (1, 2) which are formed as transfer films and which are connected to each other on two respective partial film track ends by means of an adhesive (15, 8, 92, 93, 65, 65') that is activated by supplying heat or by supplying radiation when connecting.

10. Film track according to claim 9, comprising a carrier film (11) and a decorative layer, in particular metal layer and/or colour layer (14), and made up of at least two partial film tracks (1, 2,) which are connected to each other on two respective partial film track ends by a, in particular transparent, belt (63, 63'), preferably made of material which comprises polyethylene, with a thickness of between 8 and 20 µm, preferably of between 10 and 15 µm.

## Revendications

1. Procédé servant à assembler des extrémités de bandes de film d'une première bande de film (1) et d'une seconde bande de film (2), dans lequel les deux bandes de film fournissent un film de transfert et comprennent un film de support (11) et une strate décorative, en particulier une couche en métal et/ou une couche colorée (14),
dans lequel l'assemblage est effectué au moyen d'une matière adhésive (15, 8, 92, 93, 65, 65'), qui est désactivée dans un état de base à température ambiante et qui peut être activée par l'apport de chaleur ou par l'apport d'un rayonnement et qui est activée dans le cadre du procédé et dans lequel la matière adhésive est fournie sur un support (9, 9', 63, 63') isolé présentant une forme de bande.

2. Procédé selon la revendication 1, où le support présentant une forme de bande est de manière préférée transparent et est constitué en particulier par un matériau, qui comprend du polytéréphtalate d'éthylène (PET).

3. Procédé selon l'une quelconque des revendications 1 ou 2, où le support présentant une forme de bande présente une épaisseur comprise entre 5 µm et 100 µm, de manière préférée comprise entre 8 µm et 20 µm, de manière particulièrement préférée comprise entre 10 µm et 15 µm et la couche de matière adhésive dessus présente une épaisseur comprise entre 1 µm et 5 µm, de manière préférée comprise entre 2 µm et 3 µm.

4. Procédé selon l'une quelconque des revendications précédentes, où les deux bandes de film sont découpées et positionnées avant une application du support (63, 63') présentant une forme de bande de telle manière qu'elles sont contiguës, et en ce que le support (63, 63') présentant une forme de bande est placé sur les extrémités contiguës des bandes de film (1, 2) et la matière adhésive (65, 65') est dès lors activée de sorte que le support (63, 63') présentant une forme de bande soit collé sur les deux bandes de film (1, 2), dans lequel de manière préférée les deux bandes de film (1, 2) sont posées de manière à se chevaucher l'une l'autre et une découpe à travers les deux bandes de film est réalisée dans la zone du chevauchement, en particulier à l'aide d'un couteau, d'une lame de rasage, d'un cylindre de coupe, de ciseaux, d'un couteau de découpage, au moyen d'un laser ou d'ultrasons, et où les extrémités de bandes de film (16, 26) ainsi obtenues découpées à la bonne longueur sont retirées.

5. Procédé selon l'une quelconque des revendications 1 à 3, où le support (9) présentant une forme de bande supporte des deux côtés de la matière adhésive (92, 93) et les extrémités de bandes de film sont disposées de manière à se chevaucher et le support (9) présentant une forme de bande est placé dans la zone du chevauchement entre les extrémités de bandes de film et la matière adhésive est dès lors activée de sorte que le support (9) présentant une forme de bande soit collé entre les deux extrémités de bandes de film.

6. Procédé selon l'une quelconque des revendications 1 à 3, où les extrémités de bandes de film sont disposées de manière à se chevaucher les unes les autres et le support (9') présentant une forme de bande est posé dans la zone du chevauchement entre les extrémités de bandes de film et est obtenu à l'aide d'un outil d'estampage à chaud (5), la strate décorative (14) de la première bande de film (2) est transférée sur le support (9') présentant une forme de bande et la matière adhésive (93) se détache du support (9') présentant une forme de bande et est transférée sur la seconde bande de film (1), le support (9') présentant une forme de bande est ensuite retiré et un outil d'estampage à chaud (5) ou un rayonnement est alors à nouveau appliqué de sorte que les extrémités de bandes de film soient collées les unes aux autres dans la zone du chevauchement.

7. Procédé selon l'une quelconque des revendications précédentes, où les bandes de film (1, 2) fournissent un film d'estampage à chaud ou un film d'estampage à froid.

8. Procédé selon l'une quelconque des revendications précédentes, où respectivement au moins un motif ou un repère se trouvant sur les deux bandes de film est pris en compte lors de l'assemblage des bandes de film afin que les motifs ou repères respectifs soient disposés selon un ajustement précis les uns par rapport aux autres.

9. Bande de film, comprenant un film de support (11) et une strate décorative, en particulier une couche en métal et/ou une couche colorée (14), et composée d'au moins deux bandes de film de support (1, 2), qui sont réalisées sous la forme d'un film de transfert et qui sont assemblées les unes aux autres au niveau de deux extrémités de bandes de film partielles respectives au moyen d'une matière adhésive (15, 8, 92, 93, 65, 65') activée lors de l'assemblage par l'apport de chaleur ou par l'apport d'un rayonnement.

10. Bande de film selon la revendication 9, comprenant un film de support (11) et une strate décorative, en particulier une couche en métal et/ou une couche colorée (14), et composée d'au moins deux bandes de film partielles (1, 2), qui sont assemblées les unes aux autres au niveau de deux extrémités de bandes de film partielles respectives par une bande (63, 63') en particulier transparente, de préférence en un matériau, qui comprend du polyéthylène, en une épaisseur comprise entre 8 et 20 µm, de manière préférée entre 10 et 15 µm.
